Europäisches Patentamt

European Patent Office

Office européen des brevets

(19)

(11) **EP 0 646 875 B1**

(12) **FASCICULE DE BREVET EUROPEEN**

(45) Date de publication et mention
de la délivrance du brevet:
**27.11.2002 Bulletin 2002/48**

(51) Int Cl.⁷: **G06F 13/40**, G06F 15/16

(21) Numéro de dépôt: **94402193.0**

(22) Date de dépôt: **30.09.1994**

(54) **Procédé et système d'interconnexion pour la gestion de messages dans un réseau de processeurs à structure parallèle**

Verfahren und System von Zwischenverbindungen zur Verwaltung von Meldungen in einem Prozessorennetzwerk mit paralleler Struktur

Method and system of interconnection to manage messages in a processors network with a parallel structure

(84) Etats contractants désignés:
**CH DE GB IT LI**

(30) Priorité: **04.10.1993 FR 9311787**

(43) Date de publication de la demande:
**05.04.1995 Bulletin 1995/14**

(73) Titulaires:
• **COMMISSARIAT A L'ENERGIE ATOMIQUE**
**75015 Paris Cédex 15 (FR)**
• **Aerospatiale Matra**
**75116 Paris (FR)**

(72) Inventeurs:
• **Letellier, Laurent**
**F-92100 Boulogne Billancourt (FR)**
• **Essafi, Hassane**
**F-91400 Orsay (FR)**
• **Collette, Thierry**
**F-91940 Les Ulis (FR)**
• **Larue, Jean-François**
**F-78220 Viroflay (FR)**
• **Guerin, Jean-Pierre**
**F-91400 Orsay (FR)**
• **Rebillat, Jean**
**F-78410 Aubergenville (FR)**

(74) Mandataire: **Dubois-Chabert, Guy et al**
**BREVATOME**
**3, rue du Docteur Lanceraux**
**75008 Paris (FR)**

(56) Documents cités:
**EP-A- 0 186 150** **EP-A- 0 281 757**
**FR-A- 2 680 026**

EP 0 646 875 B1

**Description**

Domaine technique

La présente invention concerne un procédé pour gérer la circulation de messages de même taille dans un réseau de processeurs élémentaires organisés selon une structure parallèle telle que, par exemple, une structure de type SIMD (Single Instruction Stream Multiple Data Stream) ; elle concerne en outre un système d'interconnexion permettant la mise en oeuvre de ce procédé.

L'invention trouve des applications dans le domaine du traitement de données. Elle s'applique, plus particulièrement, au traitement de données relatives à des éléments d'images de moyen niveau et à la génération graphique.

Etat de la technique

Parmi les systèmes permettant le traitement de données, nombreux sont ceux qui n'assurent pas une cohérence des messages transmis entre les différents processeurs d'un même réseau. Très souvent, lorsqu'un processeur envoie, sur le réseau, un message comportant plusieurs données, ces données se mélangent, lors de leur réception par le processeur destinataire du message, avec d'autres données provenant de messages envoyés par d'autres processeurs. Le processeur destinataire doit alors effectuer un tri sur les données reçues pour reconstituer les messages.

Il est connu, lors de l'utilisation de machines massivement parallèles de type SIMD, de s'appuyer sur des échanges réguliers entre les processeurs pour éviter de tels mélanges de données.

Dans le cas d'une application au traitement d'images, ces machines massivement parallèles de type SIMD peuvent assurer certains niveaux du traitement d'images. En effet, l'homme de l'art considère que les traitements des images peuvent être classés en trois niveaux, à savoir :

- un bas niveau, qui consiste en un traitement de l'image, issue de capteurs, pour en déduire une image filtrée ;
- un moyen niveau, qui consiste à extraire, de l'image filtrée, les symboles utiles dans la suite du traitement par une transformation des données d'un format iconique vers un format symbolique ;
- un haut niveau, qui consiste à traiter ces symboles puis à les transformer pour en déduire les actions à effectuer, ce niveau contenant l'intelligence du traitement d'images car il contient, notamment, les algorithmes de reconnaissance de forme et les prises de décision.

Les traitements de haut niveau sont mis en oeuvre le plus souvent par des systèmes multiprocesseurs de type MIMD (Multiple Instruction Stream Multiple Data Stream), c'est-à-dire des structures complexes permettant un parallélisme aussi bien des instructions que des données.

Les traitements de bas niveau sont généralement assurés par des systèmes multiprocesseurs de type SIMD, c'est-à-dire des systèmes dans lesquels les processeurs effectuent en même temps une même opération sur des données différentes.

Les traitements de moyen niveau peuvent également être mis en oeuvre par un système multiprocesseurs SIMD. Un tel système multiprocesseurs est relié à un réseau de communication ou système d'interconnexion qui assure de nombreux types d'échanges entre les différents processeurs du système. Il assure, notamment, l'intercommunication de chaque processeur vers n'importe quel autre processeur, la communication d'un processeur vers tous les autres processeurs, et la communication de tous les processeurs vers un seul processeur. Il assure ainsi une distribution de données permettant de gérer efficacement les ressources disponibles, à savoir les processeurs élémentaires du système. Dans le traitement d'images de moyen niveau, chaque processeur peut être associé à un pixel d'une image, ou à un groupe de pixels et avoir accès aux pixels voisins grâce aux liaisons d'interconnexion du système. Selon ce système, les processeurs sont organisés en une structure parallèle : tous les processeurs, désirant effectuer un traitement, effectuent le même traitement en même temps. Un tel système d'interconnexion est décrit dans la demande de brevet français publiée sous le numéro FR-2680026.

Ces systèmes massivement parallèles sont généralement mis en oeuvre sur des réseaux à mailles carrées, rectangulaires ou hexagonales ou encore sur des réseaux en hypercube, seules ces classes de réseaux permettant de disposer d'un système électronique suffisamment simple pour réaliser des architectures à haut degré de parallélisme. Cependant, sur de tels réseaux, les liens inter-processeurs sont statiques et ne permettent donc guère de communications irrégulières entre les processeurs du fait du synchronisme de leur fonctionnement.

Aussi, pour conserver une gestion simple de ces systèmes d'interconnexion, l'efficacité du réseau est bien souvent sacrifiée au profit de la cohérence des données.

Exposé de l'invention

La présente invention a justement pour but de remédier à cet inconvénient. A cette fin, elle propose un procédé pour gérer la priorité d'accès au réseau et un système d'interconnexion mettant en oeuvre cette gestion des priorités à l'émission.

De De façon plus précise, la présente invention concerne un procédé de gestion des messages circulant dans un réseau en anneau de processeurs élémentaires organisés selon une structure parallèle et aptes à traiter, par cycle, des messages de même taille, chacun de ces processeurs étant connecté sur le réseau par l'intermédiaire d'un module d'interconnexion, caractérisé en ce qu'une gestion des priorités des modules d'interconnexion pour l'émission et pour la réception des messages est établie par circulation de jetons dans le réseau et en ce que, une taille des messages à émettre sur le réseau étant spécifiée avant la première émission, ledit procédé consiste en ce que :

- lorsqu'un module d'interconnexion reçoit un jeton, ledit module d'interconnexion réceptionne une première donnée du message circulant dans le réseau, si ce message est destiné au processeur élémentaire auquel il est associé ;

- le module d'interconnexion vérifie s'il dispose d'une place mémoire suffisante pour mémoriser le message en entier :

  • si cette place mémoire est insuffisante, le module d'interconnexion renvoie le message sur le réseau ;
  • si cette place mémoire est suffisante, il mémorise la première donnée du message, puis toutes les données successives jusqu'à ce qu'il détecte une fin du message ;

- si le processeur élémentaire a un message à envoyer, il vérifie que le module d'interconnexion dispose d'une place mémoire suffisante pour stocker le message à envoyer en entier :

  • si au moins un message a été stocké, le module d'interconnexion envoie la première donnée de ce message sur le réseau puis toutes les données successives du message ;

  si aucun message n'a été stocké, le module d'interconnexion attend de recevoir un jeton suivant.

Avant la première émission de messages sur le réseau, chaque processeur élémentaire émet un jeton s'il vérifie les équations :

$$(NPE \bmod TMESS) = 0$$

et

$$(N-NPE) \geq TMESS,$$

avec NPE compris entre 0 et N-1 et
où TMESS est la taille des messages à émettre, NPE est un numéro de processeur élémentaire dans le réseau et N est le nombre total des processeurs élémentaires connectés sur le réseau.

L'invention concerne en outre un système d'interconnexion mettant en oeuvre le procédé ci-dessus. Ce système comporte:

- une pluralité de processeurs élémentaires aptes à effectuer des traitements asynchrones, organisés selon une structure parallèle et communiquant entre eux de façon synchrone ; et
- une pluralité de modules d'interconnexion, chaque module d'interconnexion étant associé à un processeur élémentaire pour assurer la connexion dudit processeur élémentaire sur le réseau. Il se caractérise en ce que chaque module d'interconnexion comporte :

- une cellule connectée aux cellules des processeurs voisins, et qui assure, lorsqu'un jeton est présent, d'une part, la réception de la première donnée du message circulant dans le réseau et destiné au processeur élémentaire auquel elle est associée et, d'autre part, l'émission du message que le processeur veut envoyer sur le réseau ;
- un module de réception connecté entre la cellule et le processeur élémentaire et assurant la mémorisation des messages entiers reçus par la cellule et destinés au processeur érémentaire ;
- un module d'émission connecté entre le processeur élémentaire et la cellule et assurant la mémorisation des messages entiers que le processeur élémentaire veut envoyer sur le réseau.

Avantageusement, chaque module d'émission comporte une mémoire apte à stocker chacun des messages à émettre et un circuit logique apte à déterminer si la mémoire est vide ou non-vide, pleine ou non-pleine.

De même, chaque module de réception comporte une mémoire apte à stocker chacun des messages reçus et un circuit logique apte à déterminer si la mémoire est pleine ou non-pleine, vide ou non-vide.

Selon un mode de réalisation de l'invention, le système d'interconnexion comporte un module de contrôle central connecté sur le réseau par l'intermédiaire d'une cellule et assurant la gestion du séquencement du réseau.

Selon un autre mode de réalisation, le système d'interconnexion comporte un module de contrôle central connecté à chacune des cellules et connecté sur le réseau par l'intermédiaire d'une cellule supplémentaire qui réalise l'initialisation des jetons en début de cycle.

Selon une application de l'invention, ce système d'interconnexion peut être utilisé pour le traitement d'images de moyen niveau.

## Brève description des dessins

- la figure 1 représente le schéma de principe du système d'interconnexion de l'invention ;
- la figure 2 représente schématiquement un module d'interconnexion avec ses entrées/sorties assurant la liaison entre le processeur associé et le réseau ; et
- les figures 3A et 3B représentent les diagrammes d'état, respectivement, lors de l'émission d'un message et de la réception d'un message.

## Exposé détaillé de modes de réalisations

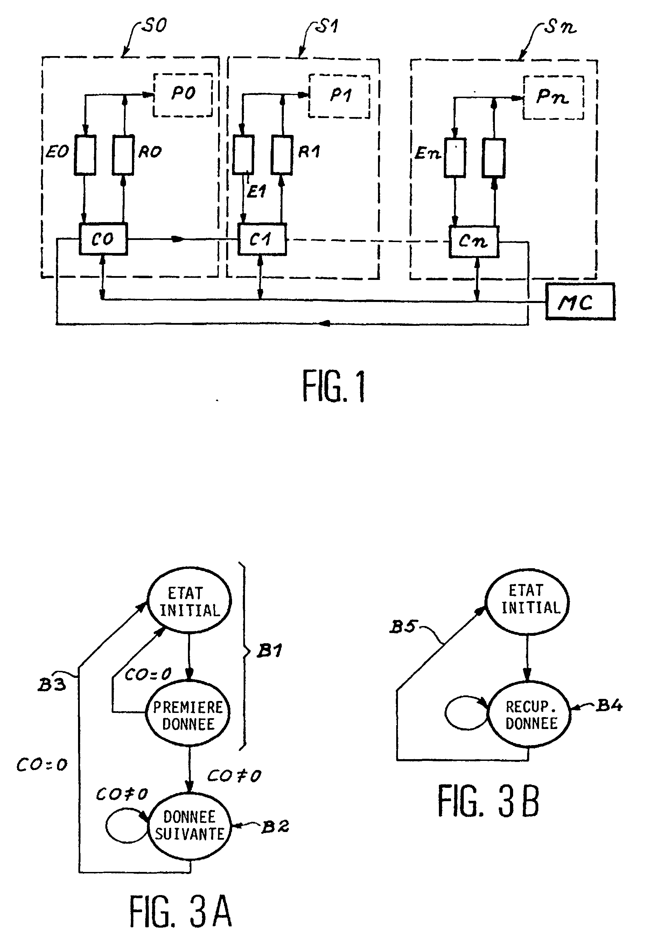

Sur la figure 1, on a représenté le schéma de principe du système d'interconnexion selon l'invention, que l'on appelle également "réseau intelligent" ou "réseau en anneau". Ce système d'interconnexion comprend une pluralité de stations, appelées également "noeuds", et comportant chacune une unité de traitement et un module d'interconnexion qui comprend une cellule et deux modules, à savoir un module de réception des messages et un module d'émission des messages. Ces stations sont reliées entre elles de manière à former une boucle, d'où l'appellation de "réseau en anneau". Ce réseau en anneau fonctionne sur le principe d'une circulation de jetons. Sur ce réseau, le principe de base utilisé est l'existence de jetons. Ces jetons circulent en permanence sur le réseau. Aussi, chaque station du réseau peut recevoir ou émettre un message lorsqu'elle est en possession d'un jeton et si, à ce moment, elle ne souhaite pas émettre, elle renvoie le jeton reçu sur le réseau. Si une station veut émettre un message, cette station doit attendre d'avoir reçu un jeton pour le renvoyer avec ses informations et l'adresse de la station destinataire sur le réseau.

Selon le procédé de l'invention, plusieurs jetons circulent simultanément sur le réseau. Un message comportant plusieurs données successives est associé à chaque jeton. Ainsi, dans le réseau, circulent des jetons associés chacun à un message, le jeton définissant le début du message. Tous les messages circulant simultanément sur le réseau ont la même taille. Aussi, pour un message de taille 3, une station sur trois, dans le réseau, reçoit un jeton. Si une station reçoit un jeton auquel est associé un message qui lui est destiné, la station lit ce message. Si ce message ne comporte pas d'information, ou si elle vient de lire ce message et qu'elle souhaite émettre elle-même un message, la station envoie son message avec le jeton sur le réseau.

Selon l'exemple décrit sur la figure 1, les unités de traitement sont des processeurs élémentaires. Elles pourraient être, également, des unités de calculs, une unité de contrôle, etc.

Sur la figure 1, les stations sont notées So,..., Sn et les cellules sont notées C0, C1,..., Cn; les processeurs élémentaires associés à ces cellules sont référencés, respectivement, P0, P1,..., Pn ; de même, les modules de réception associés à chaque cellule sont notés, respectivement, R0, R1,..., Rn, et les modules d'émission associés à ces cellules sont notés, respectivement, E0, E1,..., En.

Ainsi, le réseau en anneau représenté sur la figure 1 est constitué d'un ensemble de cellules CO, C1,..., Cn connectées les unes aux autres. Chaque cellule C0, C1,..., Cn est connectée à un module de réception R0, R1,..., Rn et à un module d'émission E0, E1,..., En qui lui sont associés. Chaque processeur élémentaire P0, P1,..., Pn est connecté à un module d'émission et à un module de réception qui lui sont associés.

Pour une description plus précise du réseau, la station S1 va être décrite plus dans le détail ; il est entendu que toutes les stations S0 à Sn sont similaires à cette station S1.

La station S1 comporte une cellule C1 connectée à la cellule C0 de la station S0 précédente dans l'anneau et à la cellule de la station suivante dans l'anneau, cette dernière n'étant pas représentée sur la figure 1 par mesure de simplification de la figure. Cette cellule C1 est elle-même connectée au module de réception R1 à qui elle transmet les messages reçus du réseau. Ce module de réception R1 est connecté sur le processeur élémentaire P1 qui lit chacun des messages enregistrés dans le module de réception R1. Le processeur P1 est également connecté sur le module d'émission E1 à qui il transmet les messages qu'il veut émettre. Ce module d'émission E1 est apte à mémoriser chacun de ces messages que le processeur P1 veut transmettre sur le réseau. Chaque message est mémorisé jusqu'à ce que la cellule C1 soit dans la capacité d'émettre le message sur le réseau.

Ce système d'interconnexion comporte, en outre, une unité de contrôle MC connectée directement aux cellules CO, C1,..., Cn. Cette unité de contrôle permet de gérer, au moins en partie, la circulation des jetons dans le réseau. Cette unité de contrôle étant de type connu et étant décrite dans la demande de brevet FR-2680026, citée précédemment, elle n'est pas représentée sur les figures et ne sera pas décrite de façon plus détaillée.

Ainsi, pendant que les cellules C0, C1, ..., Cn et l'unité de contrôle gèrent la circulation des messages dans l'anneau, les processeurs élémentaires P0, P1,..., Pn peuvent effectuer d'autres traitements, tels que les traitements de bas et moyens niveaux dans le cas d'une application au traitement d'images. Un tel réseau est donc considéré comme un réseau de mode séquentiel asynchrone.

Selon un autre mode de réalisation du système d'interconnexion de l'invention, un module de contrôle central MC est connecté sur le réseau via une cellule supplémentaire insérée dans l'anneau des cellules C0, C1,..., Cn décrites précédemment. Ce module de contrôle MC permet d'injecter les jetons sur le réseau à la fréquence correspondant à la taille de message spécifiée. Ce module de contrôle MC gère notamment le séquencement du réseau. De façon plus précise, ce module de contrôle MC a pour rôle d'informer les processeurs de l'état du réseau. Lorsqu'un module de réception est plein, il l'indique à l'unité de contrôle qui peut dérouter les processeurs vers une phase de lecture. De même, lorsqu'un module d'émission est plein, il gère les deux cas de figures possibles :

- Soit l'application impose de garder tous les processeurs à la même itération (travail sur des images, par exemple) : il faut alors indiquer à l'unité de contrôle de suspendre l'exécution pour dérouter les processeurs vers une phase de lecture du module de réception. Cette exécution reprendra, dès que tous les modules d'émissions qui étaient pleins, ne le seront plus.
- Soit l'application permet aux processeurs de prendre de l'avance (travail sur des listes, par exemple) : on peut alors inhiber uniquement le processeur dont le module d'émission est plein, les autres continuant à travailler. Cela se règle par programme et le module de contrôle n'intervient plus.

Le module de contrôle peut, selon un mode de réalisation, préciser aux processeurs si des données sont encore présentes dans les modules d'émission et dans les cellules du réseau. En lecture du module de réception, les processeurs savent ainsi si des données sont encore susceptibles d'arriver.

Ce module se compose de circuits logiques ou de composants programmables. Il peut être intégré à une unité de commande de la machine parallèle.

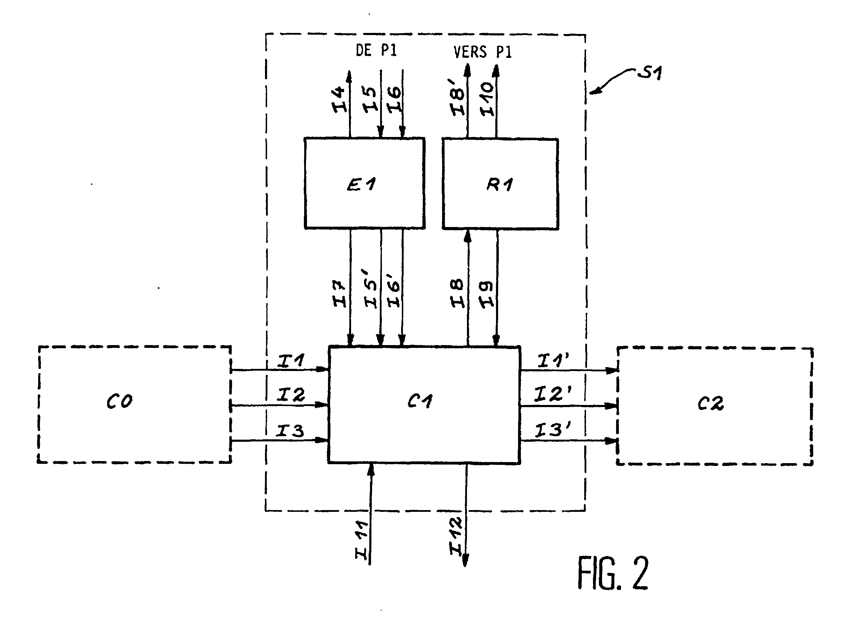

Sur la figure 2, on a représenté schématiquement le module d'interconnexion, que l'on appelle également "station" S1.

On voit donc sur cette figure 2 la cellule C1 qui reçoit des informations I1, I2 et I3 en provenance de la cellule précédente dans l'anneau, à savoir la cellule C0. De façon identique à la cellule C0, la cellule C1 transmet, à chaque décalage du réseau, des informations I'1, I'2 et I'3 vers la cellule suivante dans le réseau, à savoir la cellule C2. Ces informations respectives I1, I2, I3 et I'1, I'2, I'3 correspondent aux trois informations composant un message circulant dans le réseau:

- les informations I3 et I'3 (codées, par exemple, sur 32 bits), correspondent aux champs des données à transmettre d'un processeur à un autre ;
- les informations I2 et I'2 (codées, par exemple, sur 10 bits), correspondent au champ d'adresse relatif au numéro du processeur à qui le message est destiné ;
- les informations I1 et I'1 (généralement codées sur 2 bits), correspondent au champ de contrôle du message, ce champ de contrôle indiquant si la donnée est valide ou non valide et si un jeton est présent.

La cellule C1, comme toutes les cellules du réseau, se charge de l'émission, de la réception et du transfert des messages vers d'autres cellules. Cette cellule C1 détermine si un message peut être émis sur le réseau en fonction de la présence d'un jeton et en fonction de l'information considérée valide ou non valide (information I1 ou I'1). Cette cellule C1 pourra insérer le message dans le réseau uniquement si ce message est complet dans le module d'émission E1. En outre, la cellule C1 vérifie si un message est destiné au processeur P1 auquel elle est associée ; cette vérification est réalisée par contrôle de l'adresse contenue dans l'information I2. La présence du jeton (information I1) est indispensable pour récupérer le message provenant de la cellule C0. De plus, la cellule C1 doit s'assurer, dans le cas où un jeton est présent, que le module de réception R1 dispose d'une place mémoire suffisante pour y introduire le message reçu pour y être mémorisé. Si le module de réception R1 est considéré comme plein, c'est-à-dire s'il n'a pas la place suffisante pour stocker le message entier, la cellule C1 renvoie le message qui continue à tourner dans le réseau et qui sera lu dès que le module de réception R1 sera considéré comme non-plein. Lorsque la donnée contenue dans le message (information I3) a été lue, la cellule C1 invalide cette donnée. Dans le cas où un message reçu par la cellule C1 n'est pas destiné au processeur P1 auquel elle est associée, la cellule C1 transmet ce message à la cellule voisine C2, au temps d'horloge suivant.

Les cellules se comportent donc, dans ce système d'interconnexion, comme un vaste registre à décalage, et transmettent ainsi les messages de proche en proche.

Chaque cellule reçoit, en provenance directe du processeur, une information I11 d'insertion ou de suppression de jeton au moment de la phase d'initialisation décrite ci-après. En outre, elle envoie au module de contrôle une information I12 relative à son état (vide ou occupée) de façon à ce que le module de contrôle puisse informer les processeurs lorsqu'un cycle entier est terminé. Un nouveau cycle avec une nouvelle taille de message peut alors être mis en oeuvre.

Le module d'émission E1 reçoit du processeur élémentaire P1 (non représenté sur la figure par mesure de simplification de cette figure), les informations à envoyer sur le réseau. Ces informations comportent un champ de données, référencé I6 et un champ d'adresse comportant le numéro du processeur destinataire, référencé I5. Si le module d'émission E1 est considéré comme non-plein vu du processeur, information référencée I4, il mémorise le message à transmettre sur le réseau. Au contraire, si le module d'émission E1 est considéré comme plein, vu du processeur, le processeur devra attendre que le module d'émission E1 dispose d'une place suffisante pour lui demander de stocker le message. Ce module d'émission E1 informe la cellule C1 de son état, c'est-à-dire s'il est vide ou non-vide. Ce module d'émission E1 transmet donc des informations à la cellule C1, à savoir, une information relative à son état (vide ou non-vide), référencée I7, la donnée de message I5' et l'adresse du processeur destinataire de ce message, référencée I6'.

Ce module d'émission E1, comme tous les modules d'émission du réseau, comporte une mémoire de taille plus ou moins grande, selon les besoins de transmission sur le réseau, et un circuit logique qui peut être intégré. Ce circuit logique permet de déterminer, à partir du nombre d'informations reçues, la taille des messages et la capacité de la mémoire, s'il est vide ou non-vide, plein ou non-plein.

On précise que le module d'émission E1 est considéré comme vide par le réseau si au moins un message entier n'est pas stocké dedans (information I12).

Un tel module d'émission permet d'augmenter de façon significative l'efficacité du réseau en le saturant. Le module est géré selon une gestion par message qui contribue à assurer la cohérence de la circulation et de la réception des messages dans le réseau. En effet, ce procédé de stockage du message dans le module d'émission permet d'envoyer toutes les données d'un message de manière consécutive sur le réseau, ce qui en assure la cohérence.

Le module de réception R1 reçoit de la cellule C1 la donnée I8 à mémoriser, cette donnée correspondant à la donnée I3 lorsque le message reçu de la cellule C0 par la cellule C1 est destiné au processeur élémentaire P1 associé à la cellule C1. Ce module de réception R1 a donc pour fonction la mémorisation du message à transmettre au processeur P1. Vu de la cellule C1, il est considéré comme plein s'il ne dispose plus de la place nécessaire pour enregistrer le message entièrement. Il est considéré comme vide par le processeur si au moins un message entier peut être stocké. Ce module de réception R1 transmet à la cellule C1 une information I9 relative à son état plein ou non-plein. Il transmet en outre au processeur élémentaire P1 les données I8', ainsi qu'une information I10 relative à son état, c'est-à-dire une information pour dire au processeur s'il est vide ou non-vide.

Ce module de réception comporte une mémoire de taille plus ou moins importante selon les besoins du système d'interconnexion et un circuit logique qui peut être intégré. Ce circuit logique permet de déterminer, à partir du nombre de données reçues, la taille des messages et la capacité propre de la mémoire, si le module de réception est plein ou non plein, vide ou non-vide. Ce module est géré par une gestion par message pour les problèmes de cohérence expliqués précédemment.

Le système d'interconnexion décrit précédemment met en oeuvre le procédé de gestion de la priorité à l'émission des messages. Ce procédé consiste tout d'abord, avant le premier envoi de messages sur le réseau, à spécifier la taille des messages pouvant être émis par une instruction particulière demandée par le programmeur. Cette taille de message sera alors identique durant toute un même cycle de programme. En fonction de cette valeur, il faut définir les cellules prioritaires (c'est-à-dire les cellules associées à des processeurs prioritaires) lors du premier envoi de messages sur le réseau. Par exemple, pour une instruction de taille de messages égale à 2, TAILLE-MESSAGE=2, une cellule sur deux sera nommée prioritaire. Ces cellules prioritaires, et elles seules, auront le droit d'émettre lors du premier envoi de messages sur le réseau. Les cellules prioritaires, même si elles n'émettent pas de message, génèrent un jeton ; les cellules non prioritaires suppriment le jeton si elles en ont un. Ainsi, ces cellules sont sûres d'émettre leur premier message en entier, puisque la cellule précédente (ou les cellules précédentes si TAILLE-MESSAGE>2), ne va rien envoyer. Une telle gestion de la priorité à l'émission permet de régler les conflits d'accès au réseau dans le cas du passage de messages. Les données d'un même message se suivent donc dans les cellules du réseau et pourront arriver ainsi de façon consécutive dans le module de réception du processeur destinataire du message. De plus, cette gestion de la priorité à l'émission permet une circulation de plusieurs messages en même temps dans le réseau sans mélange des données.

Les données des messages à transmettre sont stockées par le processeur émetteur dans le module d'émission qui lui est associé en attendant la permission de leur envoi sur le réseau. Après la première phase d'émission, un certain nombre de jetons tournent dans le réseau. Chaque cellule détecte si la première donnée d'un message lui est adressée, par la présence d'un jeton, par l'adresse qui est la sienne et parce que la donnée est valide (c'est-à-dire qu'elle n'a pas encore été lue). Ainsi, lorsqu'une cellule récupère la première donnée ou donnée de tête d'un message qui lui est adressé, elle peut émettre à son tour un nouveau message car les données qui suivent sont forcément pour elle et, par conséquent, les cellules dont elle a besoin sont disponibles. De même, si une donnée déjà lue (donc, considérée non valide) est accompagnée d'un jeton, la cellule qui la reçoit peut émettre un message puisque cela signifie qu'il n'y a pas de message en transit. Une émission de messages par une cellule ne peut commencer que si le message entier est déjà stocké dans le module d'émission.

Chaque module d'interconnexion (ou station) est donc soumis à une gestion par message au niveau de l'émission.

Pour qu'une donnée soit lue par une cellule, il faut que la donnée de tête soit déjà récupérée. La cellule récupère ensuite les données qui suivent jusqu'à ce qu'elle atteigne une donnée non valide ou un nouveau message comportant un jeton. Cette récupération des données n'est toutefois possible que si le module de réception dispose de la place suffisante pour mémoriser le message en entier.

Le module d'interconnexion est donc soumis à une gestion par message au niveau de la réception. Cette gestion par message, qui permet de ne pas dissocier les éléments d'un même message, assure ainsi la cohérence des données.

Selon une variante de l'invention, la définition des cellules prioritaires (et donc les processeurs qui leur sont associés) est réalisée par les processeurs eux-mêmes lors de la première émission de messages. Ces processeurs regardent si leur numéro correspond à un multiple de la taille de message préalablement spécifiée et si le nombre de processeurs placés après eux-mêmes dans le réseau est supérieur à la taille de message spécifiée, ce qui revient à vérifier les équations suivantes :

$$(NPE\ modulo\ TMESS)=0$$

$$(N\text{-}NPE) \geq TMESS$$

avec NPE compris entre 0 et N-1, et

où NPE est le numéro du processeur courant, c'est-à-dire du processeur en cours de vérification des deux équations, N est le nombre total des processeurs connectés sur le réseau et TMESS est la taille de messages spécifiée.

Ces deux équations peuvent être évaluées par un processeur en moins d'une dizaine d'intructions. De plus, lorsque le programmeur connaît à l'avance les différentes tailles de messages qui interviennent dans les algorithmes à exécuter, il peut, par une phase initiale, réaliser une fois pour toutes ces calculs et sauvegarder les résultats dans la mémoire du processeur. Lors d'un changement de taille de message, il suffit au processeur de venir lire la case mémoire correspondante, de positionner le jeton s'il est prioritaire et de supprimer le jeton pour les autres processeurs.

Selon un autre mode de réalisation de l'invention, cette phase peut être réalisée par le module de contrôle central décrit précédemment.

Sur la figure 3A, on a représenté un mode de réalisation du diagramme d'état de la phase d'émission d'un message. Ainsi lorsqu'un message doit être émis par un processeur, le traitement se fait de la façon suivante : lorsque le module d'émission est prêt à émettre (c'est-à-dire non-vide), la cellule vérifie si elle est en possession d'un jeton. Elle vérifie également si les données reçues sont non-valides. Si elle est en présence d'un jeton, que la donnée reçue est non valide et que le module d'émission est non-vide, alors la cellule émet sur le réseau, la première donnée (appelée aussi "donnée de tête"). Elle calcule alors la valeur du compteur CO à partir de l'expression CO=TMESS-1 où TMESS est la taille de message spécifiée. Si cette valeur de compteur CO est nulle (boucle B1 sur la figure 3A), cela signifie qu'il n'y a qu'une seule donnée à émettre. Le module d'émission est donc considéré comme étant à nouveau à son état initial. Si la valeur de compteur CO n'est pas nulle, alors la cellule émet les données suivantes et calcule la valeur de compteur CO=CO-1. Tant que cette valeur de compteur n'est pas nulle (boucle B2 sur la figure 3A), la cellule émet les données suivantes. Lorsque cette valeur de compteur CO devient nulle (boucle B3 sur la figure 3A), alors la cellule considère que toutes les données de ce message sont envoyées, et le module d'émission revient à son état initial.

Selon un autre mode de réalisation, un codage particulier des cellules non utilisables est réalisé lors de la définition des cellules prioritaires, ces cellules vérifiant l'inéquation N-NPE < TMESS. Le retour à l'état initial du module d'émission est détecté par l'arrivée, soit d'un jeton, soit d'une telle cellule. Ce mode de réalisation ne nécessite donc pas de compteur CO.

La figure 3B représente un mode de réalisation du diagramme d'état de la phase de réception des messages. Lorsque le module de réception est non-plein, la cellule vérifie que le champ d'adresse contenu dans le message corresponde au numéro du processeur. Elle vérifie en outre la présence d'un jeton, ainsi que la validité du message. Lorsque ces conditions sont vérifiées, la cellule récupère les données contenues dans le message destiné au processeur auquel elle est associée. Tant que la cellule n'a pas trouvé la présence d'un autre jeton ou l'indication que la donnée n'est pas valide (boucle B4 sur la figure 3B), elle continue à récupérer les données du message et à les envoyer au module de réception qui les mémorise. Si la cellule détecte la présence d'un autre jeton ou la présence d'une donnée non valide (boucle B5 sur la figure 3B), alors elle considère que le message est terminé et que le module de réception peut repasser à son état initial.

Comme on l'aura sans doute compris, la gestion de la priorité à l'émission mise en oeuvre par ce réseau permet d'assurer la cohérence des données tout en garantissant un bon taux de remplissage des cellules pendant la phase de décalage. Un tel réseau réalise donc des communications irrégulières entre des processeurs à structure parallèle (par exemple de type SIMD) avec une gestion centralisée qui permet, de par sa simplicité, de connecter un très grand nombre de processeurs sur un même réseau sans nécessairement impliquer un surcoût de matériel.

Une application de ce procédé de gestion des messages dans un réseau en anneau concerne le traitement d'images. Pour le traitement d'images de moyen niveau, le réseau doit souvent centraliser des caractéristiques de primitives extraites des images afin de construire des listes d'attributs. Dans le cas d'une mémoire image distribuée sur les processeurs, ces derniers qui traitent leur partie d'images ont besoin de globaliser les résultats. Cela peut se faire en affectant une primitive (par exemple, le contour d'un objet, une tache, etc.) de l'image à chaque processeur. Ainsi, les processeurs doivent faire parvenir les attributs de la primitive qu'ils viennent de détecter au processeur qui la prend en charge. Il doivent donc réaliser des échanges dont la régularité dépend uniquement de l'image et qui peuvent comporter plusieurs données par message (par exemple, coordonnées du point détecté en abscisses et en ordonnées, niveau de gris, etc.).

Une autre application de ce procédé concerne la génération graphique. La génération graphique consiste, à partir d'une liste descriptive, à calculer les caractéristiques et afficher les pixels faisant partie de la primitive décrite. Il peut s'agir, par exemple, de tracé de segments, de remplissage de surface, etc. La mémoire étant distribuée sur les processeurs, il est fondamental de disposer d'un réseau qui puisse efficacement faire transiter les messages d'un processeur à l'autre. Par exemple, ces messages se composent pour le tracé de segments, des coordonnées du point, ainsi que de leur couleur. En effet, si chaque processeur calcule les pixels d'un segment différent, ils ne peuvent tracer que les pixels appartenant à leur banc mémoire. Ils sont donc dans l'obligation de distribuer les autres pixels à d'autres processeurs pour que ces derniers les tracent, c'est-à-dire les stockent dans leur propre mémoire.

## Revendications

1.  Procédé de gestion des messages circulant dans un réseau en anneau de processeurs élémentaires (Po,..., Pn) organisés selon une structure parallèle et aptes à traiter, par cycle, des messages de même taille, chacun de ces processeurs étant connecté sur le réseau par l'intermédiaire d'un module d'interconnexion,
    **caractérisé en ce qu'**une gestion des priorités des modules d'interconnexion pour l'émission et pour la réception des messages est établie par circulation de jetons dans le réseau et **en ce que**, une taille des messages (TMESS) à émettre sur le réseau étant spécifiée avant la première émission, ledit procédé consiste **en ce que** :

    -   lorsqu'un module d'interconnexion reçoit un jeton, ledit module d'interconnexion réceptionne une première donnée du message circulant dans le réseau, si ce message est destiné au processeur élémentaire auquel il est associé ;
    -   le module d'interconnexion vérifie s'il dispose d'une place mémoire suffisante pour mémoriser le message en entier :

        •   si cette place mémoire est insuffisante, le module d'interconnexion renvoie le message sur le réseau ;
        •   si cette place mémoire est suffisante, il mémorise la première donnée du message, puis toutes les données successives jusqu'à ce qu'il détecte une fin de message ;

-   si le processeur élémentaire a un message à envoyer, il vérifie que le module d'interconnexion dispose d'une place mémoire suffisante pour stocker le message à envoyer en entier :

    •   si au moins un message a été stocké, le module d'interconnexion envoie la première donnée de ce message sur le réseau puis toutes les données successives du message ;
    •   si aucun message n'a été stocké, le module d'interconnexion attend de recevoir un jeton suivant.

2.  Procédé selon la revendication 1, **caractérisé en ce que**, avant la première émission de messages sur le réseau, chaque processeur élémentaire émet un jeton s'il vérifie les équations :

$$(NPE \text{ modulo } TMESS)=0$$

et

$$(N-NPE) \geq TMESS,$$

avec NPE compris entre 0 et N-1 et
où TMESS est la taille des messages à émettre, NPE est un numéro de processeur élémentaire dans le réseau et N est le nombre total des processeurs élémentaires connectés sur le réseau.

3.  Système d'interconnexion mettant en oeuvre le procédé selon l'une quelconque des revendications 1 et 2 comportant :

    -   une pluralité de processeurs élémentaires (P0,..., Pn) aptes à effectuer des traitements asynchrones, organisés selon une structure parallèle ; et
    -   une pluralité de modules d'interconnexion, chaque module d'interconnexion étant associé à un processeur élémentaire pour assurer la connexion dudit processeur élémentaire sur le réseau,

    **caractérisé en ce que** chaque module d'interconnexion comporte :

    -   une cellule (C0,..., Cn), connectée aux cellules des processeurs voisins, et qui assure, lorsqu'un jeton est présent, d'une part, la réception de la première donnée du message circulant dans le réseau et destiné au processeur élémentaire auquel elle est associée et, d'autre part, l'émission du message que le processeur veut envoyer sur le réseau ;

- un module de réception (R0,..., Rn) connecté entre la cellule et le processeur élémentaire et assurant la mémorisation des messages entiers reçus par la cellule et destinés au processeur élémentaire ;

- un module d'émission (E0,..., En) connecté entre le processeur élémentaire et la cellule et assurant la mémorisation des messages entiers que le processeur élémentaire veut envoyer sur le réseau.

4. Système selon la revendication 3, **caractérisé en ce que** chaque module d'émission comporte une mémoire apte à stocker chacun des messages à émettre et un circuit logique apte à déterminer si la mémoire est vide ou non-vide, pleine ou non-pleine.

5. Système selon la revendication 3 ou 4, **caractérisé en ce que** chaque module de réception comporte une mémoire apte à stocker chacun des messages reçus et un circuit logique apte à déterminer si la mémoire est pleine ou non-pleine, vide ou non-vide.

6. Système d'interconnexion selon l'une quelconque des revendications 3 à 5, **caractérisé en ce qu'**il comporte un module de contrôle central (MC) connecté directement à chacune des cellules du réseau pour assurer la gestion du séquencement du réseau.

7. Système d'interconnexion selon l'une quelconque des revendications 3 à 5, **caractérisé en ce qu'**il comporte un module de contrôle central (MC) connecté à chacune des cellules et connecté sur le réseau par l'intermédiaire d'une cellule supplémentaire qui réalise l'initialisation des jetons en début de cycle.

8. Système d'interconnexion pour le traitement d'images de moyen niveau selon l'une quelconque des revendications 3 à 7, **caractérisé en ce qu'**à chaque processeur est affectée une primitive de l'image traitée.

**Claims**

1. Process for the control of messages circulating in a ring network of elementary processors (Po, ..., Pn) organized in accordance with a parallel structure and able to process, per cycle, messages of the same size, each of these processors being connected to the network by means of an interconnection module, **characterized in that** a question of priorities of interconnection modules for transmission and for reception of messages is established by tfie circulation of tokens in the network and **in that** one size of messages (TMESS) to be transmitted on the network is specified prior to the first transmission, said process comprising:

- when an interconnection module receives a token, said interconnection module receives and acknowledges a first data item of the message circulating in the network if said message is intended for the elementary processor with which it is associated;

- the interconnection module checks if it has sufficient memory space for storing the entire message:

   if the memory space is inadequate, the interconnection module returns the message to the network,

   if the memory space is adequate, it stores the first data item of the message and then all the successive data items until it detects an end of the message;

- if the elementary processor has a message to be sent, it checks that the interconnection module has an adequate memory space for completely storing the message to be sent:

   if at least one message has been stored, the interconnection module supplies the first data item of said message to the network and then all the successive data items of the message;

   if no message has been stored, the interconnection module waits until it receives a following token.

2. Process according to claim 1, **characterized in that**, prior to the first transmission of messages on the network, each elementary processor transmits a token if it verifies the equations:

$$(NPE \bmod TMESS) = 0$$

and

$$(N - NPE) \geq TMESS$$

with NPE between 0 and N-1 and in which TMESS is the size of the messages to be transmitted, NPE is an elementary processor number in the network and N is the total number of elementary processors connected to the network.

3. Interconnection system implementing the process according to either of the claims 1 and 2 comprising:

- a plurality of elementary processors (PO, ..., Pn) able to perform asynchronous processing operations, organized in accordance with a parallel structure and communicating with one another in a synchronous manner; and

- a plurality of interconnection modules, each interconnection module being associated with an elementary processor in order to ensure the connection of said elementary processor to the network,

**characterized in that** each interconnection module comprises:

- a cell (CO, ..., Cn) connected to the cells of adjacent processors and ensuring, when a token is present, on the one hand the reception of the first data item of the message circulating in the network and intended for the elementary processor with which it is associated and on the.other hand the transmission of the message which the processor wishes to send to the network;

- a reception module (RO, ..., Rn) connected between the cell and the elementary processor and ensuring the storage of complete messages received by the cell and intended for the elementary processor;

- a transmission module (E0, ..., En) connected between the elementary processor and the cell and ensuring the storage of complete messages which the elementary processor wishes to send to the network.

4. System according to claim 3, **characterized in that** each transmission module incorporates a memory able to store each of the messages to be transmitted and a logic circuit able to determine whether the memory is empty or not, full or not.

5. System according to claim 3 or 4, **characterized in that** each reception module incorporates a memory able to store each of the messages received and a logic circuit able to determine whether the memory is full or not, empty or not,

6. Interconnection system according to any one of the claims 3 to 5, **characterized in that** it incorporates a central control module (MC) directly connected to each of the cells of the network in order to manage the sequencing of the network.

7. Interconnection system according to any one of the claims 3 to 5, **characterized in that** it incorporates a central control module (MC) connected to each of the cells and connected to the network by means of a supplementary cell, which initializes tokens at the start of a cycle.

8. Interconnection system for the processing of medium level images according to any one of the claims 3 to 7, **characterized in that** an original of the processed image is allocated to each processor.

**Patentansprüche**

1. Verfahren zur Verwaltung der Meldungen, die in einem ringförmigen Netzwerk von Elementarprozessoren (Po, ..., Pn) zirkulieren, das gemäß einer parallelen Struktur organisiert und fähig ist, zyklisch Meldungen derselben Größe zu verarbeiten, wobei jeder dieser Prozessoren durch einen Verbindungsmodul mit dem Netzwerk verbunden ist, **dadurch gekennzeichnet,** **dass** durch Zirkulation von Zugriffsrechten bzw. Token in dem Netzwerk eine Steuerung der Prioritäten der Verbindungsmodule für das Senden und für das Empfangen der Meldungen realisiert wird, und dadurch, dass eine Größe der in dem Netzwerk zu sendenden Meldungen (TMESS) vor der ersten Sendung spezifiziert wird, wobei das genannte Verfahren darin besteht:

- **dass**, wenn ein Verbindungsmodul ein Zugriffsrecht bzw. Token erhält, dieser Verbindungsmodul ein erstes Datum bzw. Datenelement der in dem Netzwerk zirkulierenden Meldung empfängt, wenn diese Meldung für den Elementarprozessor bestimmt ist, mit dem er verbunden ist;
- **dass** der Verbindungsmodul prüft, ob er über einen ausreichenden Speicherplatz verfügt, um die Meldung ganz abzuspeichern:

  • wenn dieser Speicherplatz nicht ausreicht, sendet der Verbindungsmodul die Meldung in das Netzwerk zurück;
  • wenn dieser Speicherplatz ausreicht, speichert er das erste Datum bzw. Datenelement der Meldung und dann alle nachfolgenden Daten, bis er ein Meldungsende detektiert;

- dass der Elementarprozessor, wenn er eine Meldung zu senden hat, überprüft, ob der Verbindungsmodul über einen ausreichenden Speicherplatz verfügt, um die zu sendende Meldung ganz zu speichern:

  • wenn wenigstens eine Meldung gespeichert worden ist, sendet der Verbindungsmodul in dem Netzwerk das erste Datum bzw. Datenelement dieser Meldung und dann alle aufeinanderfolgenden Daten der Meldung;

• wenn keine Meldung gespeichert worden ist, wartet der Verbindungsmodul auf den Empfang einer nachfolgenden Zugriffsberechtung.

2. Verfahren nach Anspruch 1, **dadurch gekennzeichnet, dass** vor einer ersten Sendung von Meldungen in dem Netzwerk jeder Elementarprozessor ein Zugriffsrecht bzw. Token sendet, wenn er folgende Gleichungen verifiziert:

$$(NPE \text{ modulo } TMESS) = 0$$

und

$$(N\text{-}NPE) \geq TMESS,$$

mit NPE enthalten zwischen 0 und N-1 und wo TMESS die Größe der zu sendenden Meldungen ist, NPE eine Nummer des Elementarprozessors in dem Netzwerk ist und N die Gesamtzahl der in dem Netzwerk verbundenen Elementarprozessoren ist.

3. Verbindungssystem zur Anwendung des Verfahrens nach einem der Ansprüche 1 und 2, umfassend:

- eine Vielzahl von Elementarprozessoren (P0, ..., Pn), fähig asynchrone Verarbeitungen durchzuführen und organisiert gemäß einer parallelen Struktur; und

- eine Vielzahl von Verbindungsmodulen, wobei jeder Verbindungsmodul einem Elementarprozessor zugeordnet ist, um die Verbindung dieses Elementarprozessors mit dem Netzwerk zu gewährleisten,

**dadurch gekennzeichnet, dass** dieser Verbindungsmodul umfasst:

- eine Zelle (CO, ..., Cn), verbunden mit den Zellen der benachbarten Prozessoren, die, wenn ein Zugriffsrecht bzw. Token präsent ist, einerseits den Empfang des ersten Datums bzw. Datenelements der in dem Netzwerk zirkulierenden Meldung und andererseits das Senden der Meldung, die der Prozessor in dem Netzwerk senden will, sicherstellt;

- einen Empfangsmodul (R0, ..., Rn), angeschlossen zwischen der Zelle und dem Elemenfarprozessor, der die Speicherung der ganzen durch die Zelle empfangenen und für den Elementarprozessor bestimmten Meldungen sicherstellt;

- einen Sendemodul (E0, ..., En), angeschlossen zwischen dem Elementarprozessor und der Zelle, der die Speicherung der ganzen Meldungen sicherstellt, die der Elementarprozessor in dem Netzwerk senden will.

4. System nach Anspruch 3, **dadurch gekennzeichnet, dass** jeder Sendemodul einen Speicher umfasst, fähig jede der zu sendenden Meldungen zu speichem, und eine logische Schaltung, fähig festzustellen, ob der Speicher leer oder nicht leer, voll oder nicht voll ist

5. System nach Anspruch 3 oder 4, **dadurch gekennzeichnet, dass** jeder Empfangsmodul einen Speicher umfasst, fähig jede der empfangenen Meldungen zu speichern, und eine logische Schaltung, fähig festzustellen, ob der Speicher voll oder nicht voll, leer oder nicht leer ist.

6. Verbindungssystem nach einem der Ansprüche 3 bis 5, **dadurch gekennzeichnet, dass** er einen zentralen Kontrollmodul (MC) umfasst, der direkt mit jeder der Zellen des Netzwerks verbunden ist, um die Verwaltung der Ablaufsteuerung des Netzwerks sicherzustellen.

7. Verbindungssystem nach einem der Ansprüche 3 bis 5, **dadurch gekennzeichnet, dass** es einen zentralen Kontrollmodul (MC) umfasst, der mit jeder der Zellen verbunden ist und mit dem Netzwerk durch eine zusätzliche Zelle verbunden ist, .die die Initialisierung der Zugriffrechte bzw. Token am Beginn des Zyklus realisiert,

8. Verbindungssystem zur Verarbeitung von Bildern mittleren Niveaus nach einem der Ansprüche 3 bis 7, **dadurch gekennzeichnet, dass** jedem Prozessor ein Grundelement des verarbeiteten Bildes zugeteilt bzw. zugeordnet wird.

FIG. 1

FIG. 3 A

FIG. 3 B

FIG. 2